# EUROPEAN PATENT APPLICATION

(11) **EP 1 675 352 A1**
(43) Date of publication of application: **28.06.2006**
(21) Application number: 05027292.1
(22) Date of filing: 14.12.2005
(51) Int. Cl.: H04L 29/08, H04L 12/58

(54) **Systems and method for handling instant messages**

(30) Priority: 21.12.2004 US 19758
(71) Applicant: Alcatel, 75008 Paris (FR)
(72) Inventor: Audu, Alexander, Garland, TX 75044 (US); Aziz, Mohammed, Plano, TX 75024 (US); Fuming, Wu, Frisco, TX 75035 (US)
(74) Representative: Dreiss, Fuhlendorf, Steimle & Becker

(57) **Abstract**

Described are systems and methods for handling presence messages intended for an offline user. When an online user wants to send an instant message to an offline user, a presence-sensing server detects and notifies the online user of the status of the offline user. The presence-sensing server then can either store the instant message in the server or send the instant message to the offline user via his preset preferred means of contact. The offline user can then filter and decide whether to participate in an online instant messaging session with the online user or to respond while remaining offline using the non-instant message method.

## Description

### Field of Activity

This disclosure relates in general to communications systems and methods, and more particularly to systems and methods for handling presence message transmissions to offline users via non-instant message formats.

### Background

Instant messaging (IM) technology has become widely popular. Communication through IM systems is enabled by the online presence of at least two users with which instant communication is desired. An interesting problem occurs when only one user is online and is trying to communicate with another user who is offline at the time.

One solution involves an online user leaving a message for an offline user. The message is subsequently stored and then presented to the offline user the next time the offline user logs online. Even though an offline user is eventually presented with the stored message, critical matters cannot be acted upon immediately since the offline user is not aware of the urgent communication until he or she next logs on. This could be a problem in many situations, including negatively impacting workplace productivity.

In traditional communications systems, such a public switched telephone network (PSTN), a solution in these situations involves call forwarding, where a user programs a messaging server with possible forwarding contacts, in case the default phone contact is not answered after a preset number of rings. However, while call forwarding in a PSTN system is a common solution for such problems in a telephone system, it is of no help in an instant messaging system.

### Summary

Disclosed are systems and methods in which an online user can reach or at least attempt to communicate with an offline user through instant messaging. Generally, an offline user presets contact information as part of a preference setting on a presence-sensing server. Any instant messages sent to the offline user will then be retargeted to the preset contact information in real-time, and without the need for the sending user to do anything differently then they would normally do during an instant messaging session. In addition, the preset contact information allows an offline user to screen and filter instant messages for added privacy control.

In one embodiment of a method of handing instant messages, the method includes receiving an instant message sent by a first user and intended to be received by a second user, and detecting an offline status of the second user in response to the receiving of the instant message. In addition, such a method includes converting the received instant message to a non-instant message format, and delivering the converted message to the offline second user via a non-instant message method that is predetermined by the second user.

In one specific embodiment of an instant message handling system constructed in accordance with the disclosed principles, the system includes an incoming instant message sent by a first user and intended to be received by a second user, and a communications server configured to receive the incoming instant message. In such an embodiment, the communications server is operable to detect an offline status of the second user in response to the receiving of the instant message, and to convert the received instant message to a non-instant message format. In addition, the server is further operable to deliver the converted message to the offline second user via a non-instant message method that is predetermined by the second user.

### Brief Description of the Drawing

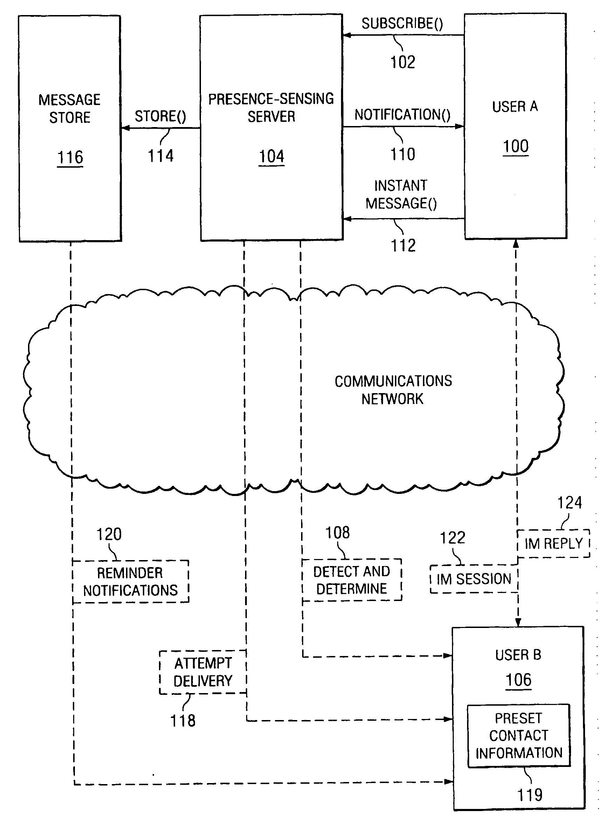

FIGURE 1 illustrates an environment for an instant message handling system as disclosed herein.

### Detailed Description of the Embodiments

Reference is made to **FIGURE 1** which illustrates an environment for an instant message system for handling instant messages from an online user to an offline user. Initially, online user A 100 is subscribed 102 to a "presence-sensing" system, which in this embodiment is a server 104 for use with a communications network. A subscribed user of a system is someone that is authorized to use and access the system. A presence-sensing system is a telecommunication application that can monitor an entity's state information (e.g., online status information) as it changes over time. In other words, if an entity, such as a user, is online or is offline but comes online at a later time, the presence-sensing system 104 will detect the user's online presence and identify the state of the user as being online. A presence-sensing system typically contains two kinds of entities called "presentities" and "watchers." A presentity is a person, place, or thing that has state information that changes over time. A watcher is another person, place, or thing that observes a presentity. A typical presence-sensing system notifies the watcher when the state of the presentity changes. Described herein is an application that can be built on top of such presence-sensing technology.

Once the state or status of the user is determined or otherwise detected, the presence-sensing system 104, connected to a communications network via a computer server, then sends out notifications 110 to any party that is interested in knowing the state information of that particular user or entity. Once user A 100 is subscribed 102 to the presence-sensing system 104, she may initiate to engage user B 106 in an instant message session by going online and sending an instant message 112. It is understood that user B 106 is also subscribed to the same presence-sensing system 104. It is further understood that additional users may also be subscribed to the same presence-sensing system 104 and that user A 100 may engage in an instant message session with more than one user at a time.

Being "online" means that a user has logged onto the communications network, such as the Internet, and is available to engage in an instant message session. Conversely, being "offline" means that a user is not logged onto the system and is not available to engage in an instant message session in a conventional manner. An instant message session occurs when at least two users are online and can thereby engage in an online conversation using real-time textual communications. In order for a traditional instant message session to take place in this case, both user A 100 and user B 106 must be online at the same time. As discussed earlier, user A 100 may also engage in instant message sessions with only one other entity (user B 106) or more than one entity, such as users C, D, E, etc. (not shown).

Once user A 100 sends an instant message 112 inviting user B 106 to engage in an instant message session, the presence-sensing system 104 will initially start by detecting and determining 108 whether or not user B 106 is online. If user B 106 is online, then the instant message session can commence when user B 106 accepts user A's 100 invitation. However, if user B 106 is not online, then the presence-sensing server 104 will send a notification message 110 back to user A 100 informing user A 100 of user B's 106 offline status.

Upon notification 110 of user B's 106 online absence, user A 100 may then command the presence-sensing server 104 to either attempt to deliver 118 an instant message 112 to user B 106 or to store 114 the instant message 112 to a message store 116. Such drastic actions are especially helpful in an emergency situation where user A 100 feels she must get a hold of user B 106. Furthermore, user A 100 may also pre-configure the presence-sensing server 104 to bypass the initial detect and determine step 108 and go directly to attempt delivery 118 of the instant message 112.

In one embodiment, the methods of attempting to deliver 118 the instant message 112 from the presence-sensing server 104 to user B 106 will be based on how user B 106 has configured his preset contact information 119, and without the need for the sending user to do anything differently then they would normally do during an instant messaging session. Attempts to reach user B 106 may be accomplished by session initiated protocol methods or non-session initiated protocol methods. Some examples of these methods include email, mobile phone, pager, short message service (e.g., cellular phone text messaging), public switched telephone network, or notifications by fax machine. In other words, the presence-sensing server 104 will use predetermined alternative means to try to contact user B 106 since user B 106 is not currently online. These means of contact are, as indicated earlier, preset contact information 119 that is predefined or preconfigured by user B 106, and may include other means similarly envisioned.

On the other hand, if user A 100 pre-configures the presence-sensing server 104 to store 114 an instant message 112 in a message store 116, reminder notifications 120 may be generated by the message store 116 to user B 106 alerting user B 106 of user A's 100 instant message 112. These reminder notifications 120 will typically also be directed to user B 106 based on user B's 106 preset contact information as discussed earlier. Furthermore, these reminder notifications 120 may continue periodically until user B 106 disposes of the instant message 112. Although reminder notifications 120 may seem to defeat the purpose of instant messaging, where the idea is to reach the intended recipient as soon as possible, such actions are commonly used when the intended sender, in this case user A 100, simply wants to engage in casual conversation with the intended recipient, in this case user B 106, or simply wants to engage in a casual instant message session or has a message to send that may not be as urgent or critical.

Even though the presence-sensing server 104 can either store 114 the instant message 112 or attempt to deliver 118 the instant message 112, user A 100 may configure the presence-sensing server 104 to perform either one or both of these functions. The ability to choose the methods of delivering the instant message 112 provides an online user (in this case user A 100) with added flexibility and convenience. For example, in one embodiment, if the instant message 112 from user A 100 is extremely critical, then user A 100 may configure the presence-sensing server 104 to perform only the attempted delivery function 118 and not to store 114 the instant message 112 in the message store 116. In another embodiment, if the instant message 112 from user A 100 is not extremely critical, like when user A 100 wants to engage in casual conversation with user B 106, then user A 100 may configure the presence-sensing server 104 to perform only the storage function 114 and not the attempted delivery function 118. In yet another embodiment, and under certain circumstances, user A 100 may designate the presence-sensing server 104 to perform both functions.

Despite user A's 100 two different methods of delivery, user A's 100 instant message 112 still may not reach user B 106 in real-time, because user B's 106 acknowledgment of the instant message 112 is dependent on user B's 106 preset contact information 119. For example, in one embodiment, user B 106 may designate an email address as the preferred method of contact 119, but user B 106 cannot get online and access the Internet at the time user A 100 has initiated an instant message 112 and has requested the presence-sensing server 104 to attempt delivery 118 of the critical message. The instant message 112 from user A 100 will still fail to reach the intended recipient, in this case user B 106, in real-time even though the presence-sensing server 104 has attempted to deliver 118 the instant message 112. However, in another embodiment, an instant message 112 from user A 100 can reach user B 106 in real-time, if user B 106 has designed a mobile phone or a pager number as the preferred method of contact 119, and user B 106 happens to be carrying the mobile phone or the pager. Then user A's 100 instant message 112 will be successfully delivered 118 from the presence-sensing server 104 to user B 106 by way of user B's 106 preset means of contact 119, in this case a mobile phone or a pager. This is in no way intended to interpret email as a much less accessible method of contacting a user. The ability of user A 100 to contact user B 106 in real-time via the presence-sensing server depends on user B's 106 availability to access his preconfigured or pre-determined methods of contacts as listed in his preset contact information 119.

Regardless of how user B 106 is contacted by user A 100, user B 106 ultimately controls whether or not to engage in an instant message session with user A 100. User B 106 can choose to accept user A's 100 invitation to engage in an instant message session 122 by logging online himself, or by responding to user A's 100 instant message 112 with an instant message reply 124 of his own, while still remaining offline of the instant messaging system. As such, user B 106 can use preset contact information 119 to control and screen any incoming instant messages 112, similar to call-screening in a public switched telephone network system. The purpose of the preset contact information then acts like an expensive, yet dynamic "spam" filter for instant messages, whereby a user can ignore unwanted/unimportant instant messages similar to an answering machine helping to filter telemarketer phone calls or an email spam filter for filtering unwanted electronic messages.

In addition, although user B 106 may engage in an online instant message session 122 with user A 100, the disclosed techniques also allow user B 106 to engage user A 100 in an instant message conversation 122 while remaining in an offline status. This in turn results in a private instant message conversation 122 between the two users. Furthermore, user B 106 may also provide an instant message response 124 to user A's 100 instant message by going online. In yet a further embodiment, although user B 106 has responded to user A's 100 instant message 112, in order to increase work productivity, user A 100 may refuse user B's 106 instant message response or reply 124 unless user B's 106 instant message response or reply 124 was delivered while user B 106 is currently online.

The following features, separately or in any combination, may also constitute advantageous embodiments of the described or claimed invention:
- The claimed and/or described method, further comprising sending a periodic reminder to the second user until the second user disposes of the stored instant message;
- The claimed and/or described method, further comprising notifying the first user of the detected status of the second user;
- The claimed and/or described method, further comprising delivering the converted message to the offline second user via a non-instant message method selected from the group consisting of email, mobile phone, fax, pager, and short message services;
- The claimed and/or described method, further comprising receiving an instant message sent by a first user at a presence-sensing communications server, the presence-sensing server further configured to provide the detecting;
- The claimed and/or described system, wherein the server is further operable to notify the first user of the detected status of the second user;
- The claimed and/or described system, wherein the non-instant message method is selected from the group consisting of email, mobile phone, fax, pager, and short message services;
- The claimed and/or described system, further comprising a reply message from the second user generated in response to receiving the converted message and received by the communications server;
- The claimed and/or described system, wherein the reply comprises an instant message reply from the second user.

It will be appreciated by those of ordinary skill in the art that the invention can be embodied in other specific forms without departing from the spirit or essential character thereof. The presently disclosed embodiments are therefore considered in all respects to be illustrative and not restrictive. The scope of the invention is indicated by the appended claims rather than the foregoing description, and all changes that come within the meaning and ranges of equivalents thereof are intended to be embraced therein.

Additionally, the section headings herein are provided for consistency with the suggestions under 37 C.F.R. § 1.77 or otherwise to provide organizational cues. These headings shall not limit or characterize the invention(s) set out in any claims that may issue from this disclosure. Specifically and by way of example, although the headings refer to a Technical Field, the claims should not be limited by the language chosen under this heading to describe the so-called technical field. Further, a description of a technology in the Background is not to be construed as an admission that technology is prior art to any invention(s) in this disclosure. Neither is the Summary of the Invention to be considered as a characterization of the invention(s) set forth in the claims found herein. Furthermore, any reference in this disclosure to invention in the singular should not be used to argue that there is only a single point of novelty claimed in this disclosure. Multiple inventions may be set forth according to the limitations of the multiple claims associated with this disclosure, and the claims accordingly define the invention(s), and their equivalents, that are protected thereby. In all instances, the scope of the claims shall be considered on their own merits in light of the specification, but should not be constrained by the headings set forth herein.

## Claims

1. A method of handing instant messages, the method comprising:
receiving an instant message sent by a first user and
intended to be received by a second user;
detecting an offline status of the second user in response to the receiving of the instant message; converting the received instant message to a non-instant message format; and
delivering the converted message to the offline second user via a non-instant message method that is predetermined by the second user.

2. A method according to claim 1, further comprising storing the received instant message.

3. A method according to claim 2, further comprising sending a periodic reminder to the second user if there is a stored instant message.

4. A method according to claim 1, further comprising a reply from the second user generated in response to receiving the converted message.

5. A method according to claim 4, further comprising receiving an instant message reply from the second user in response to receiving the converted message.

6. A method according to claim 1, wherein detecting comprises detecting an offline status of the second user using presence-sensing technology.

7. An instant message handling system, comprising:
an incoming instant message sent by a first user and
intended to be received by a second user; and
a communications server configured to receive the incoming instant message, the communications server operable to detect an offline status of the second user in response to the receiving of the instant message, to convert the received instant message to a non-instant message format, and to deliver the converted message to the offline second user via a non-instant message method that is predetermined by the second user.

8. A system according to claim 7, further comprising a message store connected to the server for storing the received instant message.

9. A system according to claim 8, wherein the message store comprises means for sending a periodic reminder to the second user if there is a stored instant message.

10. A system according to claim 9, wherein the means for sending a periodic reminder is further configured to keep sending the periodic reminder to the second user until the second user disposes of the stored instant message.

11. A system according to claim 7, wherein the communications server is a presence-sensing server connectable to the first and second users via a communications network.

12. A system according to claim 11, wherein the server is operable to detect using presence-sensing technology in the server.
